# EUROPEAN PATENT SPECIFICATION

(11) **EP 2 276 378 B1**
(45) Date of publication and mention of the grant of the patent: **27.08.2014**
(21) Application number: 09746916.7
(22) Date of filing: 01.05.2009
(51) Int. Cl.: B60N 2/48, A47C 7/38

(54) **PORTABLE SUPPORT INCLUDING A PILLOW**
TRAGBARE STÜTZE MIT EINEM KISSEN
SUPPORT PORTATIF DOTÉ D'UN COUSSIN

(30) Priority: 09.12.2008 US 316061; 15.05.2008 US 152591
(43) Date of publication of application: 26.01.2011
(73) Proprietor: Mittelstadt, John, Mill Valley, CA 94941 (US)
(72) Inventor: Mittelstadt, John, Mill Valley, CA 94941 (US)
(74) Representative: Einsel, Martin
(86) International application number: PCT/US2009/002694
(87) International publication number: WO 2009/139827

(56) References cited:
- FR-A1- 2 690 398
- US-A- 4 097 086
- US-A- 5 064 245
- US-A- 5 800 018
- US-A1- 2007 052 274
- US-B1- 6 394 554

## Description

This invention relates to a portable support for supporting the head of a seated individual and alternatively attachable to an upper corner of the back of a seat employed by the individual and depending from the upper corner or attachable to the individual and depending from the individual, said portable support comprising, in combination: an elongated pillow having upper and lower pillow and portions said upper pillow end portion being larger than said lower pillow end portion a retention structure including an adjustable, flexible retention member and a pair of spaced fasteners attached to said retention member; a first connector structure at said upper pillow end portion and a second connector structure at said lower pillow end portion.

Basically, a portable support including a pillow serves for providing support for a seated individual. Portable travel pillows and head rests are known generally. Some of these devices are specifically devised to attach to the backs of seats to provide lateral support for the head of a seated person.

A child car seat is shown in FR 2 690 398 A1. The child car seat is provided with a head rest for supporting the head of the child when sleeping. The head rest provides a retention element for securing the head rest to the back of the seat.

Portable pillows for passengers in a bus or other vehicles are further known from US A 4,097,086 and US 6,394,554 B1.

It is an object of the present invention to provide a portable support including a pillow which is useful in any situation wherein a seated individual wishes to rest his or her head.

The present invention is characterized in that said retention structure is selectively adjustable to alternatively form either a first loop configuration wherein said retention member is wrapped at least partially about and engages said upper corner or a second loop configuration wherein said retention member extends downwardly along and at least partially about the body of the individual, both of said fasteners of said pair of spaced fasteners being attached to said first connector structure when said retention member is in said first loop configuration, and one of said fasteners attached to said first connector structure and the other of said fasteners attached to said second connector structure when said retention member is in said second loop configuration.

The support is particularly, although not exclusively, for positioning against the head of a person when traveling on an airplane, train or bus or in an automobile.

### DISCLOSURE OF INVENTION

The portable support of the present invention incorporates a number of unique features not taught or suggested by the known prior art and which add to the versatility and ease of use of the portable support. According to one embodiment of the invention, the portable support may alternatively be connected to a seat back to provide the desired support or be worn by the individual to provide the desired support. The portable support is characterized by its relative simplicity and ease of use. Its position relative to a seat and/or to an individual's body may be readily adjusted to provide the desired support for the user's head and upper body.

The portable support includes an elongated pillow having first and second pillow end portions, the first pillow end portion being larger than the second pillow end portion.

First connector structure is attached to the first pillow end portion and second connector structure is attached to the second pillow end portion. In an embodiment of the invention, the first connector structure is for selectively alternatively connecting the first pillow end portion either directly to a seat or to the second connector structure, and the second connector structure is for selectively alternatively connecting the second pillow end portion either directly to a seat or to the first connector structure. As will be seen in greater detail below, these connector structure configurations allow use of the portable support as an attachment to the seat back or alternatively it may be worn or carried by the seated individual and not connected to the seat.

Alternative embodiment of the invention is dedicated to use by a seated individual without attachment to a seat back.

Other features, advantages and objects of the present invention will become apparent with reference to the following description and accompanying drawings.

### BRIEF DESCRIPTION OF DRAWINGS

Fig. 1 is a front, elevational view of a portable support constructed in accordance with the teachings of the present invention;
Fig. 2 is a rear, elevational view of the portable support;
Fig. 3 is a greatly enlarged, perspective view illustrating air inlet/outlet structure of the portable support as delineated by double headed arrow 3-3 of Fig. 1;
Fig. 4 is a view similar to Fig. 3, but illustrating a closure of the air-inlet structure in closed condition and an air tube of the structure moved to its non-extended position;
Fig. 5 is a perspective view illustrating the portable support positioned against the head of a seated individual and extending down and across the individual's chest;
Fig. 6 is a front, perspective view illustrating the portable support worn by an individual and shown in two alternate positions, one depicted by solid lines and the other by dash lines;
Fig. 7 is a view taken from the back of the individual shown in Fig. 6, the portable support being shown in its solid line position;
Fig. 8 is a greatly enlarged, perspective view of the portion of the portable support delineated by double headed arrow 8-8 in Fig. 6;
Fig. 9 is a view similar to Fig. 5, but illustrating the portable support directly connected to the back and seatbelt of a seat;
Fig. 10 is a perspective view of portions of the seat back and the portable support, the portable support shown in the process of being attached to the seat back by a tether;
Fig. 11 is a greatly enlarged view illustrating the portion of the portable support delineated by double headed arrow 11-11 in Fig. 1 and showing details of the tether and tether lock;
Fig. 12 is a perspective view illustrating a second or lower connector strap being utilized to attach the lower end of the pillow to the seatbelt;
Fig. 13 is a perspective, elevational view of the back of the seat with a flexible tether cord extending thereabout;
Fig. 14 is a view illustrating the portable support in deflated condition and secured to a piece of luggage by the second connector structure strap;
Fig. 15 is a view similar to Fig. 1 of an alternative embodiment of the invention;
Fig. 16 is a front, elevational view of an alternative embodiment including a portable support constructed in accordance with the teachings of the present invention prior to attachment of an adjustable, flexible retention member solely at the upper pillow end portion to form a first loop configuration;
Fig. 17 is a view similar to Fig. 16, but prior to attachment of the adjustable, flexible retention member at both the upper and lower pillow end portions to form a second loop configuration;
Fig. 18 is a perspective view showing selected portions of the portable support and the portable support being connected to a seat belt;
Fig. 19 is a perspective view illustrating the upper pillow portion attached by the retention member to an upper corner of a seat back, the retention member forming the first loop configuration;
Fig. 20 is a perspective view illustrating the rear of the upper seat back corner with the retention member in place;
Fig. 21 is a greatly enlarged, cross-sectional view illustrating two snap fastener elements of the flexible retention member attached to two snap fastener elements at the upper pillow end portion;
Fig. 22 is a front, perspective view illustrating the portable support worn by an individual, the flexible retention member forming the second loop configuration; and
Fig. 23 is a view taken from the back of the individual wearing the portable support shown in Fig. 21.

### MODES FOR CARRYING OUT THE INVENTION

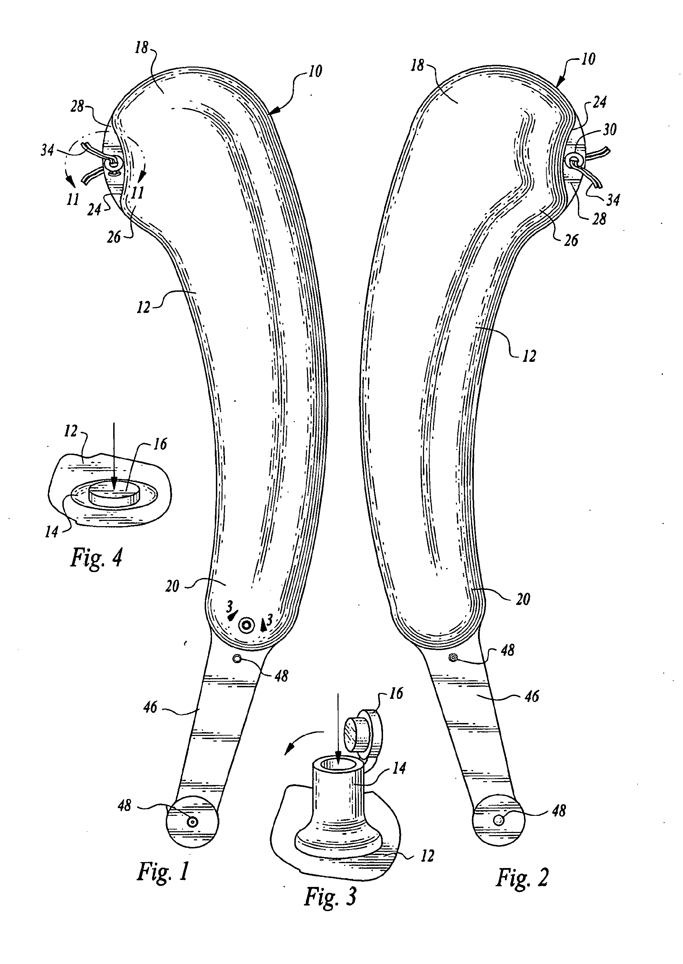

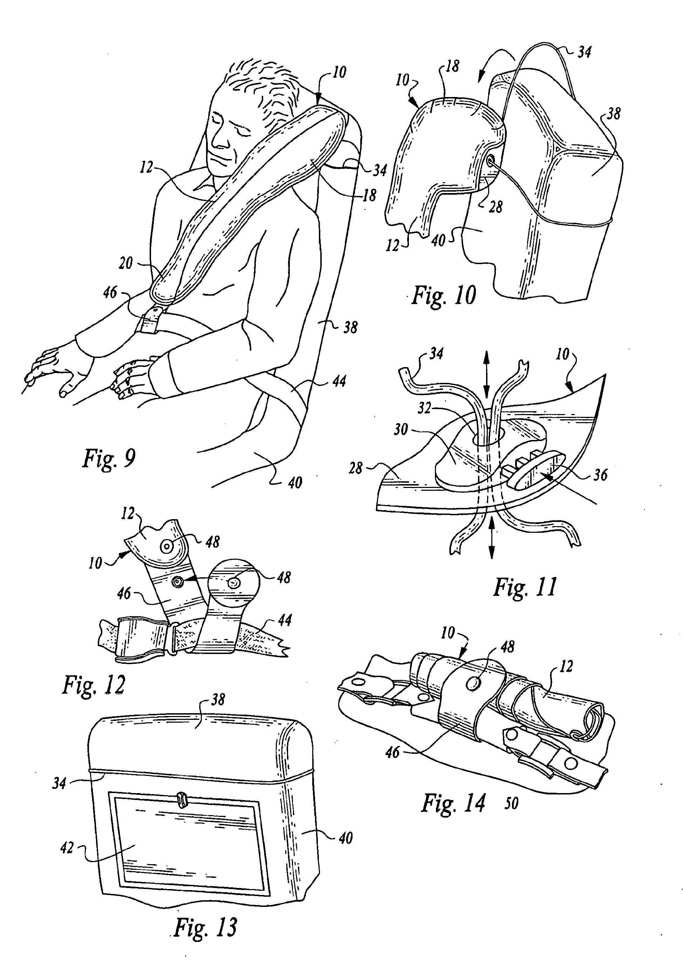

Referring now to Figs. 1 - 14, a portable support constructed in accordance with the teachings of the present invention is designated by reference numeral 10. The portable support includes an elongated pillow 12 which in the arrangement illustrated is constructed of flexible material and inflatable from a collapsed condition (shown in Fig. 14, for example) to the inflated condition shown in the rest of the figures. Any suitable conventional means may be utilized to introduce air into the pillow or alternatively allow air to exit the pillow. Fig. 3 shows an air fill/exit tube 14 which may be utilized for such purposes, a closure plug 16 utilized to seal the tube. Fig. 3 shows the air tube in an extended position and the closure plug open and Fig. 4 shows the tube recessed into the pillow and the closure plug sealing the air tube.

The elongated pillow has an upper or first pillow end portion 18 and a lower or second pillow end portion 20. The first pillow end portion is larger than the second pillow end portion, the pillow tapering inwardly in the direction of the second pillow end portion. In addition, the elongated pillow has a curved configuration and the upper or first pillow end portion 18 projects laterally, as shown. Suitably, the overall height (length) of the pillow is in the order of 28 inches for reasons which will be discussed below.

The first pillow end portion defines an inwardly projecting recess 24 at the outer periphery thereof. And more particularly, at an outwardly projecting shoulder engagement lobe 26 of the first pillow end portion.

A flat connector tab 28 is in the recess and a grommet 30 affixed to the connector tab defines an opening 32. See Fig. 11. The opening cooperates with a tether in the form of an adjustable, elongated flexible cord 34 which is doubled over and passes through the grommet opening, as shown in detail in Fig. 11. Unless locked against movement, the cord 34 is slidable in the grommet as shown by the double headed arrows. A lock in the form of a pronged lock member 36 is utilized to selectively engage the cord and prevent movement thereof when pushed into engagement with the cord within opening 32.

As shown in Figs. 9, 10 and 13, the tether cord may be wrapped about the seat back 38 of a seat such as airplane passenger seat 40 to retain the upper pillow head portion 18 in position relative to the seat. The overall height of the inflated pillow of about 28 inches prepositions the tether cord on an airline seat back so as not to interfere with the fold down tray table 42 (Fig. 13) and any built-in electronics (not shown) mounted in the seat back for the use of the passenger behind. The same 28 inch height matches the approximate height of the average sized person's torso while in a seated position.

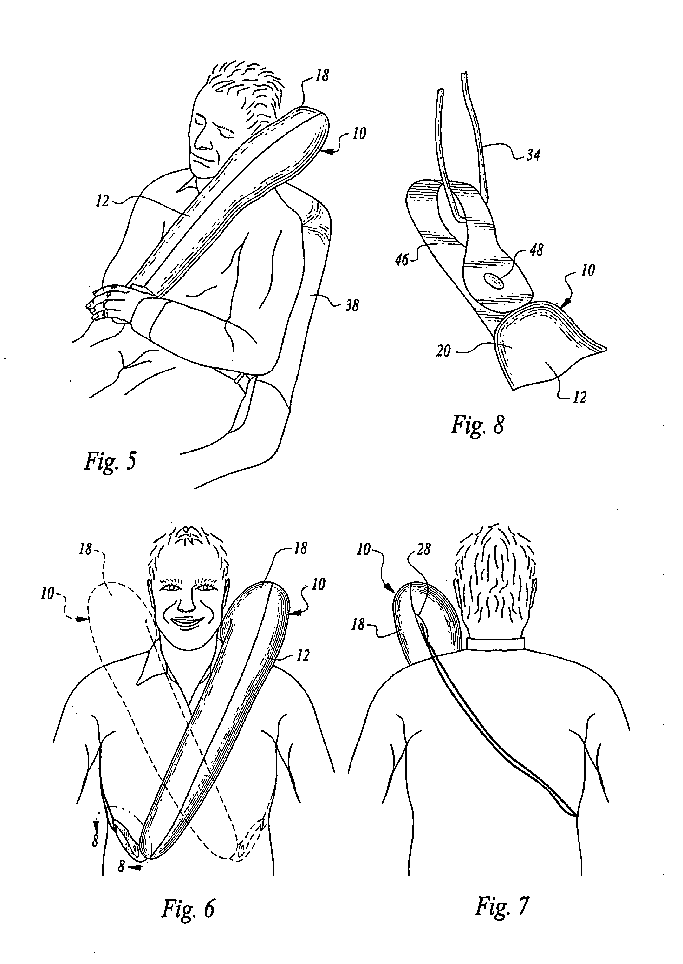

As indicated above, the pillow may be slid along the tether cord 34 so that the shoulder engagement lobe 26 can be moved sideways to any desired position on the seat back. Fig. 9 shows the lobe of the upper pillow end portion disposed over and engaging a passenger's left shoulder and the pillow tilted somewhat to the passenger's left when the pillow is engaged by his head. Alternatively, the upper pillow head portion can be slid along the tether cord relative to the seat and positioned over the passenger's right shoulder if he wishes to tilt his head and rest in that direction. The ergonomic shape of the pillow allows secure tethering of the upper portion of the pillow to the seat back while providing a shaped cutaway for a person's shoulder and torso so that the pillow may be positioned along a person's side or across the chest, the latter position being shown in Fig. 5. The feature of connector tab 28 in recess 24 is important since it prevents the grommet, lock member and tether cord from contacting the head and neck of the user, which could cause discomfort.

In Fig. 9, second connector structure of the portable support is employed to connect the lower or second pillow end portion to the seat belt 44 comprising part of the seat to connect the lower pillow end portion to the seat. The second connector structure is in the form of a flexible strap 46 which may be wrapped around the seat belt (as shown in Fig. 12) to connect the strap and lower pillow end portion to the seat to maintain the pillow along and in engagement with the user's body. The strap may be slid along the seat belt to adjust positioning of the lower pillow end portion. Preferably the flexible strap has a minimum length of 10 inches. Conventional snap fastener components 48 may be utilized to secure the flexible strap in place about the seat belt and provide additional support while sleeping. In addition, the snap fastener components provide a means for securing and stowing the elongated pillow when it is deflated and rolled up to a luggage handle 50 (Fig. 14) or other objects for convenient storage.

Rather than tether the elongated pillow to a seat back and use the strap 46 to provide an attachment with a seat belt, the flexible cord 34 and the flexible strap 46 may be connected together as shown in Fig. 8. Connecting together the strap 46 and the cord 34 creates a closed loop configuration that enables the portable support to be essentially worn by an individual, as shown in Figs. 5, 6 and 7. The portable support forms an enclosed space when the cord and flexible strap are connected together, the space being of sufficient size to accommodate an upper body portion of the individual. The portable support surrounds the upper body portion and extends from a location above a shoulder of the individual with the elongated pillow 12 extending downwardly from a location above the shoulder either alongside or across the individual's chest, the latter being shown in Figs. 5 - 7. Fig. 6 illustrates with dash lines that the upper or first pillow end portion can be positioned over either shoulder with the lobe 26 in engagement therewith, according to the wishes of the user.

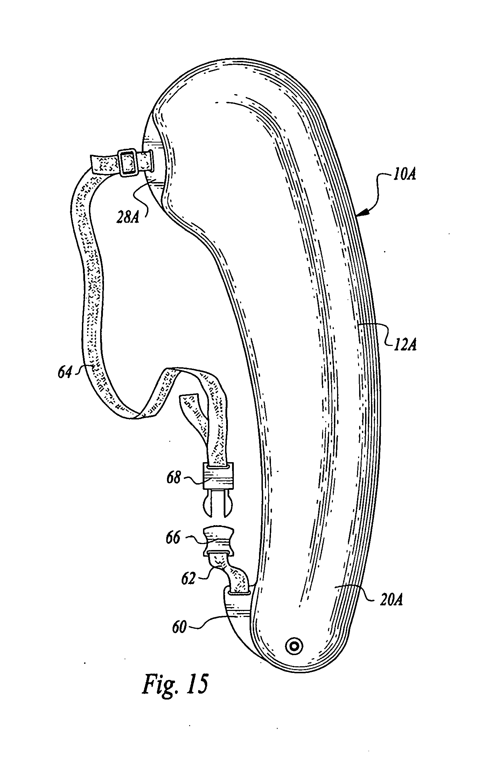

Fig. 15 illustrates an alternative embodiment 10A of the invention wherein an elongated pillow 12A incorporates not only a connector tab 28A at the upper pillow end portion, but also a second connector tab 60 extending from the second or lower pillow end portion 20A. A strap portion 62 extends from connector tab 28A and a strap portion 64 extends from connector tab 60. In the arrangement illustrated, the length of strap portion 62 is adjustable. A conventional snap fastener element 66 on strap portion 62 and a conventional snap fastener or buckle element 68 adjustably mounted on strap portion 64 may be utilized to secure the strap portions together. This particular embodiment can be "worn" by an individual and draped from an individual's shoulder to place the support pillow in position to provide a headrest and/or body support.

The pillow and other components of the portable support, such as the connector tab or tabs and the flexible connector strap, can be formed by heat bonding or ultrasonic bonding, for example. Flocked polyvinyl chloride is one suitable material. The pillow could be formed of a laminated fabric material such as used in many air mattresses, if desired. Also, the pillow could be filled with cushioning material of any suitable type.

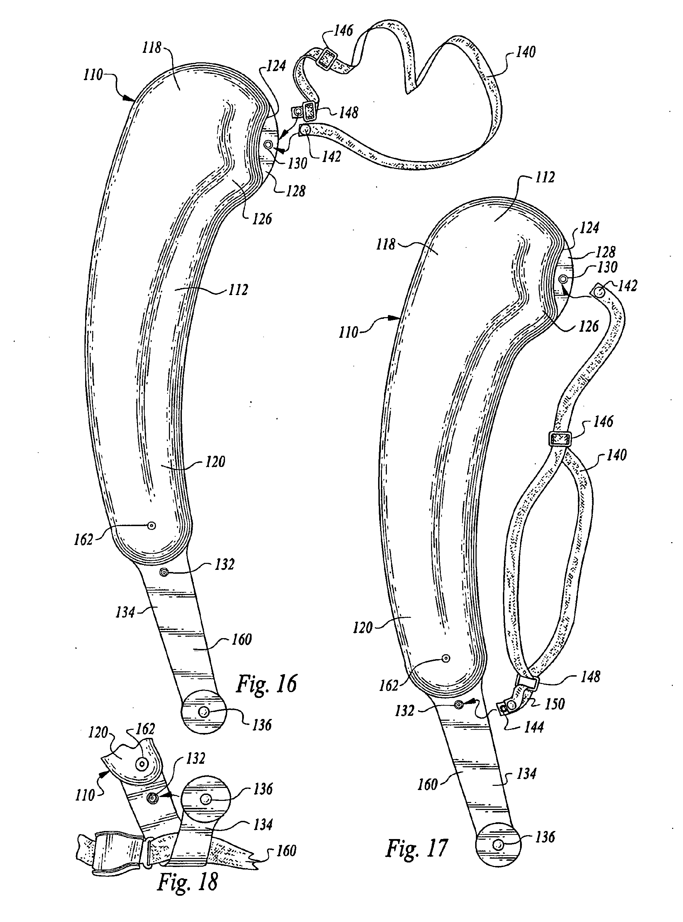

Referring now to Figs. 16 - 23, an alternative portable support constructed in accordance with the teachings of the present invention is designated by reference numeral 110. The portable support 110 includes an elongated pillow 112 which in the arrangement illustrated is constructed of flexible material and inflatable from a collapsed condition (not shown) to the inflated condition shown in the figures. Any suitable conventional means may be utilized to introduce air into the pillow or alternatively allow air to exit the pillow.

The elongated pillow has an upper or first pillow end portion 118 and a lower or second pillow end portion 120. The upper pillow end portion is larger than the lower pillow end portion, the pillow tapering inwardly in the direction of the lower pillow end portion. In addition, the elongated pillow has a curved configuration and the upper pillow end portion 118 projects laterally, as shown.

The upper pillow end portion defines an inwardly projecting recess 124 at the outer periphery thereof, and more particularly at an outwardly projecting shoulder engagement lobe 126 of the upper pillow end portion.

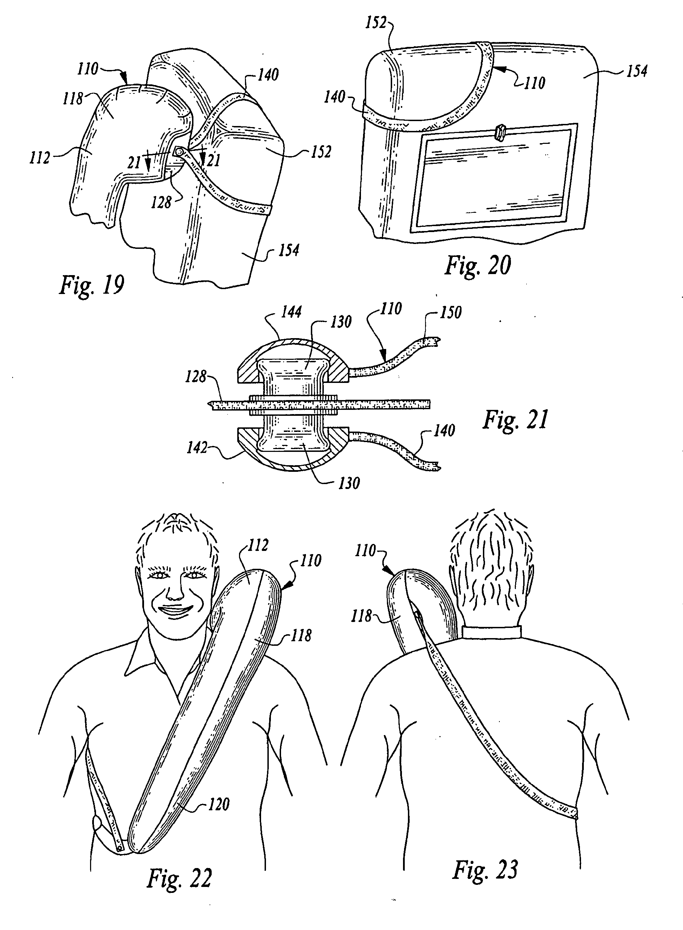

A flat connector tab 128 is in the recess. Two male snap fastener elements (gypsy studs) 130 are disposed in opposition to one another (see Fig. 21) and are attached to opposite sides of the connector tab. Together, the connector tab 128 and snap fastener elements 30 comprise first connector structure.

Second connector structure is located at said lower pillow end portion, being in the form of a gypsy stud or male snap fastener element 132 located on a flexible lower strap 134 extending downwardly from the lower pillow end portion. A second snap fastener element 136 is located at the distal end of lower strap 134.

The portable support also includes retention structure including an adjustable flexible strap 140 and a pair of female snap fastener elements 142, 144 attached to the strap 140 at spaced locations thereon. Strap 140 may be formed of any suitable material such as nylon. Fastener element 142 is attached near one of the strap ends. A ladder back type buckle or bracket 146 is sewn or otherwise secured to the other end of strap 140.

A D-loop bracket 148 is located on strap 140 which receives a flexible connector strip 150 secured at its ends by any suitable expedient such as cooperable male/female connectors (not shown). Female snap fastener element 144 is located on and projects outwardly from connector strip 50.

The effective length of flexible strap 140 may be readily adjusted to form a first loop configuration wherein it is wrapped partially about and engages an upper corner 152 of the seat back 154 of a seat such as an airplane passenger seat to retain the upper pillow head portion in position relative to the seat and occupant. This loop configuration is shown in Figs. 16, 19 and 20. The ladder back bracket 146 allows strap and loop size adjustment and serves to releasably lock the strap when adjusted as desired. In this loop configuration the snap fastener elements 142, 144 are attached to the fastener elements 130.

The flexible lower strap 134 extending downwardly from the lower pillow end portion is employed to connect the lower pillow end portion to a seat belt 160 (Fig. 18) comprising part of the seat. The flexible lower strap 134 may be wrapped around the seat belt (as shown in Fig. 18) to connect the lower strap and lower pillow end portion to the seat to maintain the pillow along and in engagement with the user's body. The strap may be slid along the seat belt to adjust positioning of the lower pillow end portion. Snap fastener element 136 may be attached to a snap fastener element 162 located on lower pillow end portion to secure the flexible strap in place about the seat belt and provide additional support while sleeping.

Rather than use the flexible strap 140 to secure the elongated pillow to a seat back upper corner and use the lower strap 134 to provide an attachment with a seat belt, the retention member can be formed into a second loop configuration that enables the portable support to be essentially worn by an individual, as shown in Figs. 22 and 23. The portable support forms an enclosed space when the female snap fastener 142 is snapped together with one of the male snap fastener elements 130 and female snap fastener element 144 is attached to male snap fastener element 132. See Fig. 21. The space is of sufficient size to accommodate an upper body portion of the individual. The portable support surrounds the upper body portion and extends from a location above a shoulder of the individual with the elongated pillow 112 extending downwardly from a location above a shoulder either alongside or across the individual's chest. The upper or first pillow end portion can be positioned over either shoulder with the lobe 126 in engagement therewith, according to the wishes of the user.

The above described embodiment is intended to illustrate the principles of the invention, but not to limit its scope.

## Claims

1. A portable support (10; 110) for supporting the head of a seated individual and alternatively attachable to an upper corner of the back of a seat employed by the individual and depending from the upper corner or attachable to the individual and depending from the individual, said portable support comprising, in combination:
an elongated pillow (12; 112) having upper and lower pillow end portions (18, 20; 118, 120) said upper pillow end portion (18; 118) being larger than said lower pillow end portion (20; 120);
a retention structure including an adjustable, flexible retention member (34, 64, 140) and a pair of spaced fasteners (142, 144) attached to said retention member (34, 64, 140);
a first connector structure (24, 28; 124, 128) at said upper pillow end portion (18; 118); and
a second connector structure (46) at said lower pillow end portion (20, 120);
**characterized in that**
said retention structure is selectively adjustable to alternatively form either a first loop configuration wherein said retention member (34, 140) is wrapped at least partially about and engages said upper corner or a second loop configuration wherein said retention member (34, 64, 140) extends downwardly along and at least partially about the body of the individual, both of said fasteners (142, 144) of said pair of spaced fasteners being attached to said first connector structure (28) when said retention member (34, 64, 140) is in said first loop configuration, and one of said fasteners attached to said first connector structure (24, 28) and the other of said fasteners attached to said second connector structure (64) when said retention member (34, 64, 140) is in said second loop configuration.

2. The portable support according to Claim 1 wherein said retention member (34; 140) comprises a flexible strap, said fasteners attached to said strap.

3. The portable support according to Claim 2 additionally comprising at least one loop size adjustment bracket connected to said flexible strap for releasably adjusting said flexible strap and locking said flexible strap in either said first loop configuration or in said second loop configuration.

4. The portable support according to Claim 2 or 3 wherein said first connector structure (24, 28) includes at least one snap fastener element, said second connector structure (46) includes at least one snap fastener element, and at least one of said fasteners attached to said strap comprises a strap snap fastener element selectively alternatively engageable with the snap fastener elements of said first and second connector structures (24, 28; 46).

5. A portable support according to Claim 4 wherein a connector bracket is connected to said strap, the strap snap fastener element selectively alternatively engageable with the snap fastener elements of the first and second connector structures being located on a connector strip secured to the connector bracket.

6. The portable support according to any of the proceeding Claims wherein said upper pillow end portion (18; 118) includes a shoulder engagement lobe (26) and defines an inwardly projecting recess (24; 124) at the outer periphery thereof, said first connector structure (24, 28; 124, 128) additionally including a connector tab (28; 128) in said recess, the at least one snap fastener element of said first connector structure (24, 28) located on said connector tab (28; 128).

7. The portable support according to Claim 6 wherein said first connector structure (24, 28) comprises a pair of snap fastener elements, the snap fastener elements of said pair of snap fastener elements disposed on opposite sides of said connector tab (28; 128).

## Patentansprüche

1. Tragbare Stütze (10; 110) zum Unterstützen des Kopfes einer sitzenden Person und entweder anbringbar an einer oberen Ecke der Rückenlehne eines von der Person besetzten Sitzes und von der oberen Ecke herabhängend oder anbringbar an der Person und von der Person herabhängend, wobei die tragbare Stütze in Kombination aufweist:
ein längliches Kissen (12; 112) mit oberen und unteren Kissenendabschnitten (18, 20; 118, 120), wobei der obere Kissenendabschnitt (18; 118) größer als der untere Kissenendabschnitt (20; 120) ist;
eine Rückhaltestruktur einschließend ein einstellbares flexibles Rückhalteelement (34, 64, 140) und zwei einen Abstand voneinander aufweisende Befestigungsmittel (142, 144), die an dem Rückhalteelement (34, 64, 140) angebracht sind;
eine erste Verbindungsstruktur (24, 28; 124, 128) an dem oberen Kissenendabschnitt (18; 118); und
eine zweite Verbindungsstruktur (46) an dem unteren Kissenendabschnitt (20, 120);
**dadurch gekennzeichnet,**
**dass** die Rückhaltestruktur wahlweise einstellbar ist, um alternativ entweder eine erste Schlaufenkonfiguration, in welcher das Rückhalteelement (34, 140) zumindest teilweise um die obere Ecke herumgewickelt ist und diese berührt, oder eine zweite Schlaufenkonfiguration zu bilden, in welcher das Rückhalteelement (34, 64, 140) sich nach unten längs und wenigstens teilweise um den Körper der Person herum erstreckt, wobei beide Befestigungsmittel (142, 144) einen Abstand voneinander aufweisen, an der ersten Verbindungsstruktur (28) angebracht sind, wenn das Rückhalteelement (34, 64, 140) in der ersten Schlaufenkonfiguration ist, und wobei eines der Befestigungsmittel an der ersten Verbindungsstruktur (24, 28) angebracht und das andere der Befestigungsmittel an der zweiten Verbindungsstruktur (64) angebracht ist, wenn das Rückhalteelement (34, 64, 140) sich in der zweiten Schlaufenkonfiguration befindet.

2. Tragbare Stütze nach Anspruch 1, in welcher das Rückhalteelement (34; 140) ein flexibles Band aufweist, wobei die Befestigungselemente an dem Band angebracht sind.

3. Tragbare Stütze nach Anspruch 2, zusätzlich aufweisend zumindest eine mit dem flexiblen Band verbundene Einstelllasche für die Schlaufengröße zum lösbaren Einstellen des flexiblen Bandes und zum Festlegen des flexiblen Bandes in entweder der ersten Schlaufenkonfiguration oder in der zweiten Schlaufenkonfiguration.

4. Tragbare Stütze nach Anspruch 2 oder 3, in welcher die erste Verbindungsstruktur (24, 28) zumindest ein Schnappbefestigungselement einschließt, wobei die zweite Verbindungsstruktur (46) zumindest ein Schnappbefestigungselement einschließt, und wobei zumindest eines der an dem flexiblen Band angebrachten Befestigungsmittel ein Bandschnappbefestigungselement aufweist und das wahlweise alternativ mit den Schnappbefestigungselementen der ersten und zweiten Verbindungsstruktur (24, 48; 46) in Verbindung bringbar ist.

5. Tragbare Stütze nach Anspruch 4, in welcher eine Verbindungslasche mit dem Band verbunden ist, wobei das Bandschnappbefestigungselement wahlweise alternativ mit den Schnappbefestigungselementen der ersten und zweiten Verbindungsstruktur in Verbindung bringbar auf einem Verbindungsstreifen angeordnet ist, an der Verbindungslasche befestigt ist.

6. Tragbare Stütze nach einem der vorstehenden Ansprüche, in welcher der obere Kissenendabschnitt (18; 118) einen Flügel zur Anlage der Schulter einschließt, einen nach innen gerichteten Einschnitt (24; 124) an dessen äußerem Umfang bildet, wobei die erste Verbindungsstruktur (24, 28; 124, 128) einen Verbindungsreiter (28; 128) in dem Einschnitt einschließt, wobei das zumindest eine Schnappbefestigungselement der ersten Verbindungsstruktur (24, 28) auf dem Verbindungsreiter (28; 128) angeordnet ist.

7. Tragbare Stütze nach Anspruch 6, in welcher die erste Verbindungsstruktur (24, 28) zwei Schnappbefestigungselemente aufweist, wobei diese Schnappbefestigungselemente auf einander gegenüber liegenden Seiten des Verbindungsreiters (28; 128) angeordnet sind.

## Revendications

1. Support portatif (10; 110) pour soutenir la tête d'une personne assise et pouvant être monté dans un coin supérieur du dossier d'un siège occupé par la personne et pendant du coin supérieur ou pouvant être monté sur la personne et pendant de la personne, ledit support portatif présentant une combinaison des éléments suivants :
- un coussin allongé (12 ; 112) avec des parties de coussin terminales supérieure et inférieure (18, 20; 118, 120), la partie de coussin terminale supérieure (18; 118) étant plus grande que la partie de coussin terminale inférieure (20 ; 120) ;
- une structure de retenue comprenant un élément de retenue flexible réglable (34, 64, 140) et une paire de moyens de fixation (142, 144) espacés l'un de l'autre et montés sur l'élément de retenue (34, 64, 140) ;
- une première structure de liaison (24, 28 ; 124, 128) au niveau de la partie de coussin terminale supérieure (18 ; 118) et
- une deuxième structure de liaison (46) au niveau de la partie de coussin terminale inférieure (20 ; 120) ;
**caractérisé en ce que** la structure de retenue peut être réglée au choix pour former respectivement une première configuration de boucle dans laquelle l'élément de retenue (34, 140) est enroulé en moins en partie autour du coin supérieur et s'engage dans celui-ci ou une deuxième configuration de boucle dans laquelle l'élément de retenue (34 ,64, 140) s'étend vers le bas le long et au moins en partie autour du corps de la personne, les deux moyens de fixation (142, 144) de la paire de moyens de fixation qui présentent une distance entre eux étant montés sur la première structure de liaison (28) lorsque l'élément de retenue (34, 64, 140) se trouve dans la première configuration de boucle, et l'un des moyens de fixation étant monté sur la première structure de liaison (24, 28) et l'autre moyen de fixation étant monté sur la deuxième structure de liaison (64) lorsque l'élément de retenue (34, 64, 140) se trouve dans la deuxième configuration de boucle.

2. Support portatif selon la revendication 1, selon lequel l'élément de retenue (34 ; 140) présente une bande flexible, les éléments de fixation étant montés sur la bande.

3. Support portatif selon la revendication 2, comportant en outre au moins une patte de réglage de la taille de la boucle, laquelle patte est reliée à la bande flexible et est destinée au réglage réversible de la bande flexible et à la fixation de la bande flexible dans la première configuration de boucle ou dans la deuxième configuration de boucle.

4. Support portatif selon la revendication 2 ou 3, selon lequel la première structure de liaison (24, 28) comprend au moins un élément de fixation par encliquetage, la deuxième structure de liaison (46) comprenant au moins un élément de fixation par encliquetage, et au moins l'un des moyens de fixation montés sur la bande flexible comprenant un élément de fixation par encliquetage de la bande, ledit élément pouvant être engagé, au choix, respectivement dans les éléments de fixation par encliquetage des première et deuxième structure de liaison (24, 48 ; 46).

5. Support portatif selon la revendication 4, selon lequel une patte de liaison est reliée à la bande, l'élément de fixation par encliquetage de la bande pouvant être engagé, au choix, respectivement dans les éléments de fixation par encliquetage des première et deuxième structure de liaison sur une bande de liaison qui est fixée à la patte de liaison.

6. Support portatif selon l'une des revendications précédentes, selon lequel la partie de coussin terminale supérieure (18; 118) comprend un lobe pour l'épaule et forme un renfoncement (24 ; 124) concave sur le pourtour extérieur de celui-ci, la première structure de liaison (24, 28 ; 124, 128) comprenant en outre une languette de liaison (28 ; 128) dans le renfoncement, l'au moins un élément de fixation par encliquetage de la première structure de liaison (24, 28) étant situé sur la languette de liaison (28 ; 128).

7. Support portatif selon la revendication 6, selon lequel la première structure de liaison (24, 28) comporte deux éléments de fixation par encliquetage, ces éléments de fixation par encliquetage étant situés sur des côtés opposés de la languette de liaison (28 ; 128).
